# EUROPÄISCHE PATENTSCHRIFT

(11) **EP 1 468 480 B1**
(45) Veröffentlichungstag und Bekanntmachung des Hinweises auf die Patenterteilung: **24.03.2010**
(21) Anmeldenummer: 02774246.9
(22) Anmeldetag: 20.11.2002
(51) Int. Cl.: H02K 3/487

(54) **DYNAMOELEKTRISCHE MASCHINE MIT VERKEILTEN WICKLUNGSSTÄBEN**
DYNAMOELECTRIC MACHINE COMPRISING WEDGED WINDING BARS
MACHINE DYNAMOELECTRIQUE A BARREAUX D'ENROULEMENT CLAVETES

(30) Priorität: 23.11.2001 DE 10157582
(43) Veröffentlichungstag der Anmeldung: 20.10.2004
(73) Patentinhaber: Alstom Technology Ltd, 5400 Baden (CH)
(72) Erfinder: GOMES DE LIMA, Paulo, CH-5430 Wettingen (CH); NEFF, Ueli, CH-9050 Appenzell Al (CH)
(86) Internationale Anmeldenummer: PCT/CH2002/000626
(87) Internationale Veröffentlichungsnummer: WO 2003/044926

(56) Entgegenhaltungen:
- NL-C- 86 560
- US-A- 3 594 597
- US-B1- 6 252 328
- PATENT ABSTRACTS OF JAPAN vol. 009, no. 240 (E-345), 26. September 1985 (1985-09-26) & JP 60 091835 A (TOSHIBA KK), 23. Mai 1985 (1985-05-23)

## Beschreibung

### TECHNISCHES GEBIET

Die vorliegende Erfindung bezieht sich auf das Gebiet der Technik dynamoelektrischer Maschinen. Sie betrifft eine dynamoelektrische Maschine gemäss dem Oberbegriff des Anspruchs 1.

Eine solche Maschine ist z.B. aus der US-A-3,949,255 bekannt.

### STAND DER TECHNIK

Aus dem Stand der Technik ist eine Vielzahl von Lösungen bekannt, wie die Wicklungsstäbe einer Generatorwicklung in den dafür vorgesehenen Nuten eines Stators verkeilt werden können. Beispiele für derartige Keilanordnungen finden sich in der US-A-3,976,901 oder der US-A-4,369,389.

Besonders bewährt haben sich Keilanordnungen mit zwischenliegenden Wellenfedern, wie sie in der eingangs genannten US-A-3,949,255 offenbart sind und in den Fig. 1 und 2 ausschnittweise dargestellt sind. Gemäss Fig. 1 und 2 haben die bekannten dynamoelektrischen Maschinen 10 eine doppelte Lage von Wicklungsstäben 13, die in nach oben offenen Nuten 12 im Stator 11 angeordnet sind. Die Nuten 12 werden mittels eines Systems von angeschrägten oder parallelen Keilen verschlossen, welches System einen (oberen) Verschlusskeil 17 und einen (unteren) Gegenkeil 15 umfasst. Zwischen dem Verschlusskeil 17 und dem Gegenkeil 15 sind Wellenfedern 16 aus faserverstärktem Epoxidharz als elastische Abstandhalter eingelegt. Unter jedem Gegenkeil 15 sind Füllstreifen 14 in unterschiedlicher Anzahl vorgesehen, um Schwankungen in den Abmessungen der Wicklungsstäbe auszugleichen.

Die Verschlusskeile 17 sind an den Seiten mit Schlitzen 19 versehen, die so angeordnet sind, dass sie bei eingeschobenem Verschlusskeil mit den im Stator-Blechpaket vorhandenen Kühlschlitzen 18 fluchten und damit den Eintritt von Kühlluft in die Kühlschlitze 18 ermöglichen. Durch den Einsatz der Wellenfedern 16 ergibt sich ein "selbsttätig nachführendes" System. Ein erneutes Verkeilen nach einer gewissen Betriebszeit ist daher in der Regel nicht erforderlich. Ein weiterer Vorteil dieses Verkeilungs-Systems ist es, dass sich der Verschlusskeil 17 beim Verkeilen nicht relativ zu den Seitenwänden der Nut 12 verschiebt.

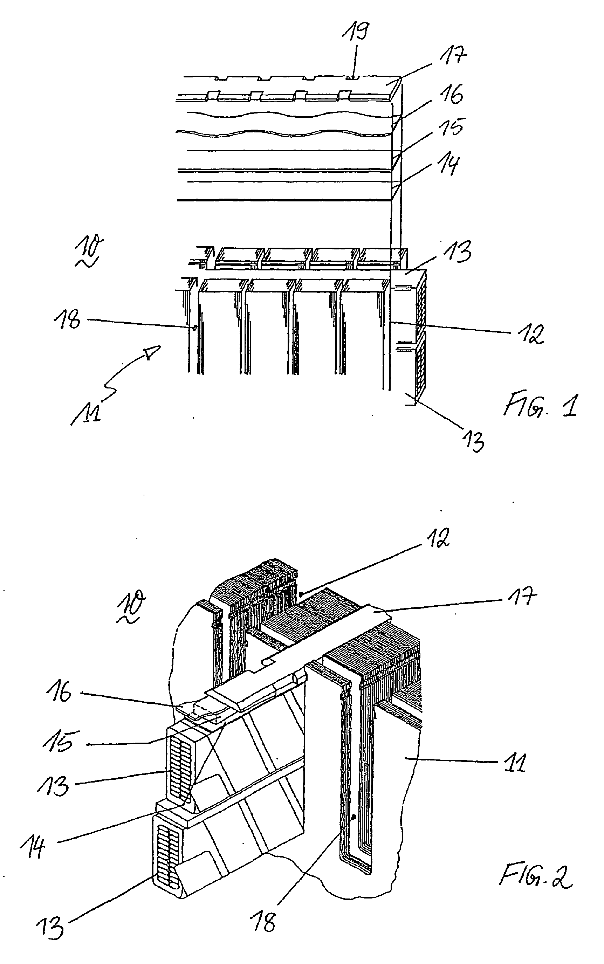

Nachteilig ist bei einer Verkeilung gemäss Fig. 1 und 2 jedoch der erhebliche Zeitaufwand, der für die Erstellung des vollständigen Systems benötigt wird.

US-A-3.594.597 offenbart eine Maschine mit den Merkmalen des Oberbegriffs des Anspruchs 1.

### DARSTELLUNG DER ERFINDUNG

Es ist daher Aufgabe der Erfindung, ein System zur Verkeilung der Wicklungsstäbe bei einer dynamoelektrischen Maschine zu schaffen, welches die Nachteile bekannter Systeme vermeidet und sich insbesondere durch eine erhebliche Verringerung der für die Erstellung des Systems erforderlichen Zeit auszeichnet.

Die Aufgabe wird durch die Gesamtheit der Merkmale des Anspruchs 1 gelöst. Der Kern der Erfindung besteht darin, die Gegenkeile zwischen den Verschlusskeilen und den Wellenfedern anzuordnen, und an bestimmten Stellen ortsfeste Einstellelemente vorzusehen, mittels derer der Abstand zwischen den Verschlusskeilen und den Gegenkeilen verändert werden kann. Statt die nötige Vorspannung der Wellenfedern durch ein zeitaufwendiges entsprechendes Einschieben der Keile zu erreichen, werden im neuen System die Keile zunächst ohne oder mit nur geringer Vorspannung der Wellenfedern eingeschoben und anschliessen durch einfaches Betätigen der Einstellelemente und der damit verbundenen Aenderung des Keilabstandes die endgültige, notwendige Vorspannung erzeugt.

Gemäss einer bevorzugten Ausgestaltung der Erfindung sind die Einstellelemente um eine ortsfeste Drehachse drehbar, und kann der Abstand zwischen den Verschlusskeilen und den Gegenkeilen durch eine Drehung der Einstellelemente um die ortsfeste Drehachse verändert werden kann. Eine solche Art der Einstellung ist besonders einfach zu verwirklichen und auch vorzunehmen.

Insbesondere sind die Einstellelemente in den Verschlusskeilen drehbar gelagert und stützen sich mit einer den Verschlusskeilen abgewandten Fläche auf den Gegenkeilen ab, wobei die Einstellelemente vorzugsweise jeweils einen Bolzenteil aufweisen, mit welchem sie in einer Bohrung im Verschlusskeil drehbar gelagert sind.

Eine erste bevorzugte Weiterbildung der Ausgestaltung zeichnet sich dadurch aus, dass der Bolzenteil des Einstellelementes ein Aussengewinde aufweist, und dass die Bohrung im Verschlusskeil als dem Aussengewinde angepasste Gewindebohrung ausgebildet ist. Durch Verdrehen des Einstellelementes ergibt sich so je nach Steigung der Gewinde eine mehr oder weniger grosse Aenderung im Abstand der Keile.

Eine zweite bevorzugte Weiterbildung der Ausgestaltung ist dadurch gekennzeichnet, dass die Einstellelemente jeweils einen zwischen dem Verschlusskeil und dem Gegenkeil liegenden, zum Bolzenteil koaxialen Scheibenteil aufweisen, und dass die Ober- und Unterseite des Scheibenteils sowie die Unterseite des Verschlusskeils und die Oberseite des Gegenkeils im Bereich des Scheibenteils derart ausgebildet sind, dass sich bei einer Drehung des Scheibenteils der Abstand zwischen Verschlusskeil und Gegenkeil verändert. Hierdurch lassen sich insbesondere Verstellmöglichkeiten realisieren, die eine andere als die lineare Abhängigkeit zwischen Verdrehwinkel und Abstandsänderung aufweisen, wie sie bei einem Gewinde gegeben ist.

Insbesondere ist eine solche nichtlineare Verstellung dann gegeben, wen in den gegenüberliegenden Seiten des Scheibenteils und der beiden Keile zueinander passende Aussparungen und aus der Fläche herausragende Erhebungen vorgesehen sind, welche je nach Drehstellung des Scheibenteils ineinandergreifen bzw. ausser Eingriff geraten.

Besonders einfach lassen sich die Einstellelemente betätigen, wenn gemäss einer anderen Ausgestaltung der Erfindung die Bohrung im Verschlusskeil als Durchgangsbohrung ausgeführt ist, und wenn auf der Oberseite des Bolzenteils eine Ausnehmung vorgesehen ist, in welche ein Werkzeug zum Betätigen des Einstellelementes einführbar ist.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer Explosionsdarstellung die Teile eines Verkeilungssystems bei einer dynamoelektrischen Maschine nach dem Stand der Technik;
- Fig. 2: im Ausschnitt die fertig verkeilte Maschine nach Fig. 1; und
- Fig. 3: in einer Explosionsdarstellung die Teile eines Verkeilungssystems gemäss einem bevorzugten Ausführungsbeispiel der Erfindung.

### WEGE ZUR AUSFÜHRUNG DER ERFINDUNG

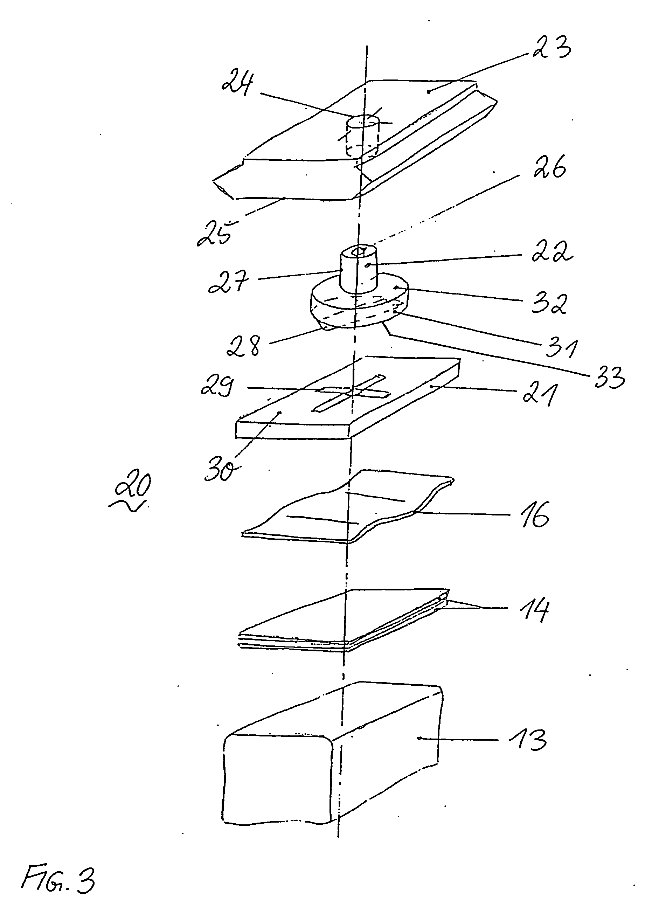

In Fig. 3 sind in einer Explosionsdarstellung die Teile eines Verkeilungssystems einer dynamoelektrischen Maschine 20 gemäss einem bevorzugten Ausführungsbeispiel der Erfindung wiedergegeben. Die (nicht dargestellten) Nuten mit den darin liegenden Wicklungsstäben 13 werden durch ein System von parallelen Keilen verschlossen, das einen (oberen) Verschlusskeil 23 und einen darunterliegenden Gegenkeil 21 umfasst. Die beiden Keile 23 und 21 folgen unmittelbar aufeinander. Unterhalb der Gegenkeile 21 sind Wellenfedern 16 aus faserverstärktem Epoxidharz und unterhalb der Wellenfedern 16 sind Füllstreifen 14 angeordnet. Die Funktion der Wellenfedern 16 und der Füllstreifen 14 ist dieselbe wie beim Verkeilungssystem aus dem Stand der Technik.

Im Unterschied zum vorbekannten Verkeilungssystem sind gemäss der Erfindung nun zwischen den Keilen 23 und 21 an vorbestimmten Orten lokale Einstellelemente 22 vorgesehen, mit deren Hilfe der Abstand zwischen den Keilen 23, 21 schnell und einfach verändert werden kann. Auf diese Weise lässt sich durch Verstellen der Einstellelemente 22 die gewünschte Vorspannung der Wellenfedern 16 einstellen, ohne dass ein langwieriges Verschieben der Keile 23, 21 gegeneinander notwendig ist.

Bei dem in Fig. 3 dargestellten Ausführungsbeispiel ist das einzelne Einstellelement 22 als ortsfest angeordnetes, um eine (senkrechte) Drehachse drehbares Element ausgebildet. Das Einstellelement 22 setzt sich zusammen aus einem (oberen) zylindrischen Bolzenteil 27 und einem (unteren) kreisrunden Scheibenteil 31. Beide Teile 27, 31 sind koaxial zur Drehachse ausgebildet. Mit dem Bolzenteil 27 ist das Einstellelement 22 in einer Bohrung 24 im Verschlusskeil 23 drehbar gelagert. Mit dem Scheibenteil 31 liegt das Einstellelement 22 zwischen den beiden Keilen 23 und 21 und stützt sich insbesondere mit der Unterseite 33 des Scheibenteils 31 auf der Oberseite des Gegenkeils 21 ab. Das Einstellelement 22 ist vorzugsweise einstückig und aus einem nicht-magnetischen Material hergestellt. Die Einstellung des Einstellelementes 22 erfolgt durch ein Drehen um die Drehachse um einen bestimmten Winkel.

Mit der Drehung des Einstellelementes 22 verbunden ist eine Aenderung des Abstandes zwischen den beiden Keilen 23 und 21. Ein linearer Zusammenhang zwischen Drehwinkel und Abstand ergibt sich dabei, wenn gemäss einer bevorzugten Ausgestaltung der Erfindung der Bolzenteil 27 ein Aussengewinde aufweist, mit welchem das Einstellelement 22 in die als Gewindebohrung ausgeführte Bohrung 24 einschraubbar ist. Wird dann beim Drehen das Einstellelement 22 aus der Gewindebohrung 24 herausgeschraubt, vergrössert sich der Abstand zwischen den beiden Keilen 23 und 21 und die unter dem Gegenkeil 21 liegende Wellenfeder 16 wird stärker zusammengedrückt und damit stärker vorgespannt. Die Einstellung des Einstellelementes 22 erfolgt dabei zweckmässigerweise mittels eines Werkzeuges, das von oben durch die Bohrung 24 drehfest in eine dafür vorgesehene Ausnehmung 26 - z.B. in Form eines Innensechskant oder dgl. - im Bolzenteil 27 eingeführt werden kann.

Andere Arten von Einstellmechanismen lassen sich beim Einstellelement 22 dadurch realisieren, dass die gegenüberliegenden Seiten 25, 32 bzw. 33, 30 des Scheibenteils 31 und der Keile 23, 21 in spezieller Weise geformt sind. Bei dem in Fig. 3 dargestellten Ausführungsbeispiel sind auf der Oberseite 30 des Gegenkeils 21 zwei in Kreuzform angeordnete längliche Aussparungen 29 mit halbkreisförmigem Querschnittsprofil vorgesehen. Auf der Unterseite 33 des Scheibenteils 31 ragt aus der Fläche eine entsprechende halbzylindrische Erhebung 28 heraus. In vier jeweils um 90° voneinander entfernten Drehstellungen des Einstellelementes 22, in denen die Erhebung 28 in eine der Aussparungen 29 eingreift, liegt der Scheibenteil 31 mit der Unterseite 33 auf der Oberseite 30 des Gegenkeils 21 flächig auf und der Abstand der beiden Keile 23, 21 ist minimal. Wird das Einstellelement 22 aus einer dieser Stellungen herausgedreht, geraten die Erhebung 28 und die Aussparungen 29 ausser Eingriff und der Abstand der beiden Keile 23, 21 vergrössert sich um die Höhe der Erhebung 28. Durch diese schalterähnliche, nichtlineare Einstellcharakteristik des Einstellelementes 22 lässt sich die Vorspannung der Wellenfeder 16 sehr schnell und effizient erhöhen.

Selbstverständlich können vergleichbare Flächengestaltungen auch auf der Oberseite 32 des Scheibenteils 31 und auf der Unterseite 25 des Verschlusskeils 23 vorgesehen werden. Desgleichen sind andere, z.B. schräge, Formen der Flächengestaltung zur Erzeugung bestimmter Einstellcharakteristiken denkbar. Ausschlaggebend ist dabei, dass durch die Einstellung die notwendige Vorspannung der Wellenfedern 16 erreicht werden kann. Im Rahmen der Erfindung ist es weiterhin möglich, ein oder mehrere Einstellelement(e) pro Verschlusskeil 23 vorzusehen

### BEZUGSZEICHENLISTE

- 10,20: dynamoelektrische Maschine
- 11: Stator (Blechpaket)
- 12: Nut
- 13: Wicklungsstab
- 14: Füllstreifen
- 15,21: Gegenkeil
- 16: Wellenfeder
- 17,23: Verschlusskeil
- 18: Kühlschlitz
- 19: Schlitz
- 22: Einstellelement
- 24: Bohrung (Gewindebohrung)
- 25: Unterseite (Verschlusskeil)
- 26: Ausnehmung
- 27: Bolzenteil
- 28: Erhebung
- 29: Aussparung
- 30: Oberseite (Gegenkeil)
- 31: Scheibenteil
- 32: Oberseite (Scheibenteil)
- 33: Unterseite (Scheibenteil)

## Patentansprüche

1. Dynamoelektrische Maschine (20) mit Wicklungsstäben (13), welche in dafür vorgesehene Nuten (12) der dynamoelektrischen Maschine (20) eingelegt sind, wobei die Nuten (12) jeweils durch Verschlusskeile (23) erschlossen und zwischen den Verschlusskeilen (23) und den darunterliegenden Wicklungsstäben (13) Wellenfedern (16) vorgesehen sind, welche mittels Gegenkeilen (21) vorgespannt werden, die zwischen den Verschlusskeilen (23) und den darunterliegenden Wicklungsstäben (13) angeordnet sind, wobei ortsfeste Einstellelemente (22) vorgesehen sind, mittels derer der Abstand zwischen den Verschlusskeilen (23) und den Gegenkeilen (21) verändert werden kann, **dadurch gekennzeichnet, dass** die Gegenkeile (21) zwischen den Verschlusskeilen (23) und den Wellenfedern (16) angeordnet sind.

2. Dynamoelektrische Maschine nach Anspruch 1, **dadurch gekennzeichnet, dass** die Einstellelemente (22) um eine ortsfeste Drehachse drehbar sind, und der Abstand zwischen den Verschlusskeilen (23) und den Gegenkeilen (21) durch eine Drehung der Einstellelemente (22) um die ortsfeste Drehachse verändert werden kann.

3. Dynamoelektrische Maschine nach Anspruch 2, **dadurch gekennzeichnet, dass** die Einstellelemente (22) in den Verschlusskeilen (23) drehbar gelagert sind und sich mit einer den Verschlusskeilen (23) abgewandten Fläche auf den Gegenkeilen (21) abstützen.

4. Dynamoelektrische Maschine nach Anspruch 3, **dadurch gekennzeichnet, dass** die Einstellelemente (22) jeweils einen Bolzenteil (27) aufweisen, mit welchem sie in einer Bohrung (24) im Verschlusskeil (23) drehbar gelagert sind.

5. Dynamoelektrische Maschine nach Anspruch 4, **dadurch gekennzeichnet, dass** der Bolzenteil (27) des Einstellelementes (22) ein Aussengewinde aufweist, und dass die Bohrung (24) im Verschlusskeil (23) als dem Aussengewinde angepasste Gewindebohrung ausgebildet ist.

6. Dynamoelektrische Maschine nach Anspruch 4, **dadurch gekennzeichnet, dass** die Einstellelemente (22) jeweils einen zwischen dem Verschlusskeil (23) und dem Gegenkeil (21) liegenden, zum Bolzenteil (27) koaxialen Scheibenteil (31) aufweisen, und dass die Ober- und Unterseite (32, 33) des Scheibenteils (31) sowie die Unterseite (25) des Verschlusskeils (23) und die Oberseite (30) des Gegenkeils (21) im Bereich des Scheibenteils (31) derart ausgebildet sind, dass sich bei einer Drehung des Scheibenteils (31) der Abstand zwischen Verschlusskeil (23) und Gegenkeil (21) verändert.

7. Dynamoelektrische Maschine nach Anspruch 6, **dadurch gekennzeichnet, dass** in den gegenüberliegenden Seiten des Scheibenteils (31) und der beiden Keile (21, 23) zueinander passende Aussparungen (29) und aus der Fläche herausragende Erhebungen (28) vorgesehen sind, welche je nach Drehstellung des Scheibenteils (31) ineinandergreifen bzw. ausser Eingriff geraten.

8. Dynamoelektrische Maschine nach einem der Ansprüche 4 bis 7, **dadurch gekennzeichnet, dass** die Bohrung (24) im Verschlusskeil (23) als Durchgangsbohrung ausgeführt ist, und dass auf der Oberseite des Bolzenteils (27) eine Ausnehmung vorgesehen ist, in welche ein Werkzeug zum Betätigen des Einstellelementes (22) einführbar ist.

9. Dynamoelektrische Maschine nach einem der Ansprüche 1 bis 8, **dadurch gekennzeichnet, dass** pro Verschlusskeil (23) eine Mehrzahl von Einstellelementen (22) vorgesehen ist.

10. Dynamoelektrische Maschine nach einem der Ansprüche 1 bis 9, **dadurch gekennzeichnet, dass** die Einstellelemente (22) aus einem nicht-magnetischen Material bestehen.

## Claims

1. Dynamoelectrical machine (20) having winding bars (13) which are inserted into slots (12) provided for this purpose in the dynamoelectrical machine (20), with the slots (12) each being closed by cover wedges (23), and with corrugated springs (16) being provided between the cover wedges (23) and the winding bars (13) located underneath them, which are prestressed by means of opposing wedges (21), which are arranged between the cover wedges (23) and the winding bars (13) located underneath them, wherein fixed-position adjusting elements (22) are provided, by means of which it is possible to vary the distance between the cover wedges (23) and the opposing wedges (21), **characterized in that** the opposing wedges (21) are arranged between the cover wedges (23) and the corrugated springs (16).

2. Dynamoelectrical machine according to Claim 1, **characterized in that** the adjusting elements (22) can rotate about a fixed-position rotation axis and the distance between the cover wedges (23) and the opposing wedges (21) can be varied by rotation of the adjusting elements (22) about the fixed-position rotation axis.

3. Dynamoelectrical machine according to Claim 2, **characterized in that** the adjusting elements (22) are mounted in the cover wedges (23) such that they can rotate, and are supported on the opposing wedges (21) by means of a surface facing away from the cover wedges (23).

4. Dynamoelectrical machine according to Claim 3, **characterized in that** the adjusting elements (22) each have a bolt part (27) by means of which they are mounted in a hole (24) in the cover wedge (23) such that they can rotate.

5. Dynamoelectrical machine according to Claim 4, **characterized in that** the bolt part (27) of the adjusting element (22) has an external thread, and **in that** the hole (24) in the cover wedge (23) is in the form of a threaded hole matched to the external thread.

6. Dynamoelectrical machine according to Claim 4, **characterized in that** the adjusting elements (22) each have a disk part (31), which is located between the cover wedge (23) and the opposing wedge (21) and is coaxial with respect to the bolt part (27), and **in that** the upper face and lower face (32, 33) of the disk part (31) as well as the lower face (25) of the cover wedge (23) and the upper face (30) of the opposing wedge (21) are designed in the area of the disk part (31) such that the distance between the cover wedge (23) and the opposing wedge (21) varies when the disk part (31) is rotated.

7. Dynamoelectrical machine according to Claim 6, **characterized in that** cutouts (29) which match one another and projections (28) which project out of the surface and engage in one another and are disengaged from one another depending on the rotation position of the disk part (31) are provided in the opposite faces of the disk part (31) and of the two wedges (21, 23).

8. Dynamoelectrical machine according to one of Claims 4 to 7, **characterized in that** the hole (24) in the cover wedge (23) is in the form of a through-hole, and **in that** a recess into which a tool for operation of the adjusting element (22) can be inserted is provided on the upper face of the bolt part (27).

9. Dynamoelectrical machine according to one of Claims 1 to 8, **characterized in that** two or more adjusting elements (22) are provided for each cover wedge (23).

10. Dynamoelectrical machine according to one of Claims 1 to 9, **characterized in that** the adjusting elements (22) are composed of a non-magnetic material.

## Revendications

1. Machine dynamoélectrique (20) à barres d'enroulement (13), qui sont introduites dans des rainures (12) prévues à cet effet de la machine dynamoélectrique (20), les rainures (12) étant fermées à chaque fois par des clavettes de fermeture (23) et des ressorts ondulés (16) étant prévus entre les clavettes de fermeture (23) et les barres d'enroulement (13) sous-jacentes, lesquels sont précontraints au moyen de contre-clavettes (21), qui sont disposées entre les clavettes de fermeture (23) et les barres d'enroulement sous-jacentes (13), des éléments d'ajustement fixes (22) étant prévus, au moyen desquels la distance entre les clavettes de fermeture (23) et les contre-clavettes (21) peut être modifiée, **caractérisée en ce que** les contre-clavettes (21) sont disposées entre les clavettes de fermeture (23) et les ressorts ondulés (16).

2. Machine dynamoélectrique selon la revendication 1, **caractérisée en ce que** les éléments d'ajustement (22) peuvent tourner autour d'un axe de rotation fixe, et la distance entre les clavettes de fermeture (23) et les contre-clavettes (21) peut être modifiée par une rotation des éléments d'ajustement (22) autour de l'axe de rotation fixe.

3. Machine dynamoélectrique selon la revendication 2, **caractérisée en ce que** les éléments d'ajustement (22) sont montés à rotation dans les clavettes de fermeture (23) et s'appuient sur les contre-clavettes (21) avec une surface opposée aux clavettes de fermeture (23).

4. Machine dynamoélectrique selon la revendication 3, **caractérisée en ce que** les éléments d'ajustement (22) présentent à chaque fois une partie de boulon (27), avec laquelle ils sont montés à rotation dans un alésage (24) dans la clavette de fermeture (23).

5. Machine dynamoélectrique selon la revendication 4, **caractérisée en ce que** la partie de boulon (27) de l'élément d'ajustement (22) présente un filetage extérieur et **en ce que** l'alésage (24) dans la clavette de fermeture (23) est réalisé sous forme d'alésage fileté adapté au filetage extérieur.

6. Machine dynamoélectrique selon la revendication 4, **caractérisée en ce que** les éléments d'ajustement (22) présentent à chaque fois une partie de rondelle (31) coaxiale à la partie de boulon (27), située à chaque fois entre la clavette de fermeture (23) et la contre-clavette (21), et **en ce que** le côté supérieur et le côté inférieur (32, 33) de la partie de rondelle (31) ainsi que le côté inférieur (25) de la clavette de fermeture (23) et le côté supérieur (30) de la contre-clavette (21) sont réalisés dans la région de la partie de rondelle (31) de telle sorte que dans le cas d'une rotation de la partie de rondelle (31), la distance entre la clavette de fermeture (23) et la contre-clavette (21) soit modifiée.

7. Machine dynamoélectrique selon la revendication 6, **caractérisée en ce que** dans les côtés opposés de la partie de rondelle (31) et des deux clavettes (21, 23), sont prévus des rehaussements (28) sortant de la surface et des évidements (29) adaptés les uns aux autres, qui entrent en prise ou sortent d'engagement en fonction de la position de rotation de la partie de rondelle (31).

8. Machine dynamoélectrique selon l'une quelconque des revendications 4 à 7, **caractérisée en ce que** l'alésage (24) est réalisé dans la clavette de fermeture (23) sous forme d'alésage traversant et **en ce que** sur le côté supérieur de la partie de boulon (27) est prévu un évidement, dans lequel peut être inséré un outil pour actionner l'élément d'ajustement (22).

9. Machine dynamoélectrique selon l'une quelconque des revendications 1 à 8, **caractérisée en ce que** l'on prévoit pour chaque clavette de fermeture (23) une pluralité d'éléments d'ajustement (22).

10. Machine dynamoélectrique selon l'une quelconque des revendications 1 à 9, **caractérisée en ce que** les éléments d'ajustement (22) se composent d'un matériau non magnétique.
